# FASCICULE DE BREVET EUROPEEN

(11) **EP 1 663 793 B1**
(45) Date de publication et mention de la délivrance du brevet: **13.06.2007**
(21) Numéro de dépôt: 04787353.4
(22) Date de dépôt: 10.09.2004
(51) Int. Cl.: B65D 5/02, B65D 5/50, B65D 5/54

(54) **EMBALLAGE POUR LA PREPARATION ET LE CONDITIONNEMENT DE COMPOSITIONS ALIMENTAIRES DU TYPE KEBAB**
BEHÄLTER ZUR ZUBEREITUNG UND VERPACKUNG VON KEBABARTIGEN NAHRUNGSMITTELZUSAMMENSETZUNGEN
CONTAINER FOR THE PREPARATION AND PACKAGING OF KEBAB-TYPE FOOD COMPOSITIONS

(30) Priorité: 10.09.2003 BE 200300488
(43) Date de publication de la demande: 07.06.2006
(73) Titulaire: France Kebab, 11100 Narbonne (FR)
(72) Inventeur: THIBAUT, Bernard, F-50180 AGNEAUX (FR); MEYER, Johan, B-2950 Kapellen (BE)
(74) Mandataire: Gosse, Michel
(86) Numéro de dépôt international: PCT/FR2004/002305
(87) Numéro de publication internationale: WO 2005/026001

(56) Documents cités:
- DE-A- 19 925 861
- FR-A- 2 810 299
- US-A- 4 122 949

## Description

### DOMAINE DE L'INVENTION

L'invention concerne un emballage pour la préparation et le conditionnement d'une composition alimentaire du type « kebab », connue également sous les noms de « kepap », « pitta » ou « shoarma » :
- fabriquée par l'assemblage de matières alimentaires crues, notamment du veau, de la dinde ou du poulet, découpées en morceaux de formes et de dimensions quelconques ;
- commercialisée dans ledit emballage ;
- destinée à être utilisée en restauration maintenue par la broche d'un grill vertical de cuisson. Le document US-A-4934026 décrit un emballage pour la préparation et le conditionnement de brochettes.

### ARRIERE PLAN TECHNOLOGIQUE

Dans la pratique courante, le « kebab » est fabriqué de manière artisanale (manuellement) et est généralement commercialisé cru.

Le coût de la main d'oeuvre représente une part importante du coût du produit fini et l'hygiène constitue une composante non maîtrisée.

En outre, l'assemblage fait par l'empilage de matières diverses, n'apporte pas la stabilité souhaitée, aussi bien pendant les manipulations et le transport qu'en cours de cuisson chez l'utilisateur final, même dans le cas où il aurait subi une pré-cuisson.

### RESUME DE L'INVENTION

L'invention vise à réaliser un emballage mettant en oeuvre une solution inédite et originale apte à éliminer les inconvénients susmentionnés.

Elle concerne à cet effet, un emballage qui se caractérise essentiellement en ce qu'il comporte une boîte, un moule contenu dans ladite boîte et un tube, centré dans ledit moule, destiné à être traversé par la broche du grill de cuisson et en ce que ledit moule contient la préparation alimentaire qui est disposée autour dudit tube.

Selon des particularités de réalisation de l'invention :
- le moule est associé à des moyens aptes à maintenir respectivement son ouverture haute et son ouverture basse ;
- le tube est associé à des moyens aptes à maintenir respectivement son extrémité haute et son extrémité basse ;
- le moule est de forme tronconique ;
- le tube possède un profil intérieur apte à laisser passer la broche du grill de cuisson ;
- la boîte est de forme parallélépipédique à base carrée.

L'emballage selon l'invention :
- permet, grâce à la forme du moule, de donner à la masse de viande la forme souhaitée ;
- élimine, grâce à sa conception, toute manipulation de la viande de sa préparation à son utilisation ;
- permet, grâce sa forme parallélépipédique, un meilleur empilage et une bonne stabilité ;
- permet, grâce à son tube central, son positionnement direct, sans détériorer la viande, sur la broche du grill.

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins :

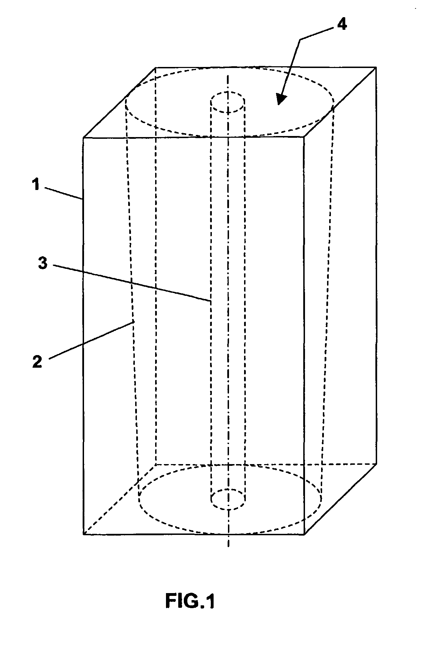

- la figure 1 représente, schématiquement et en perspective, l'emballage selon l'invention ;

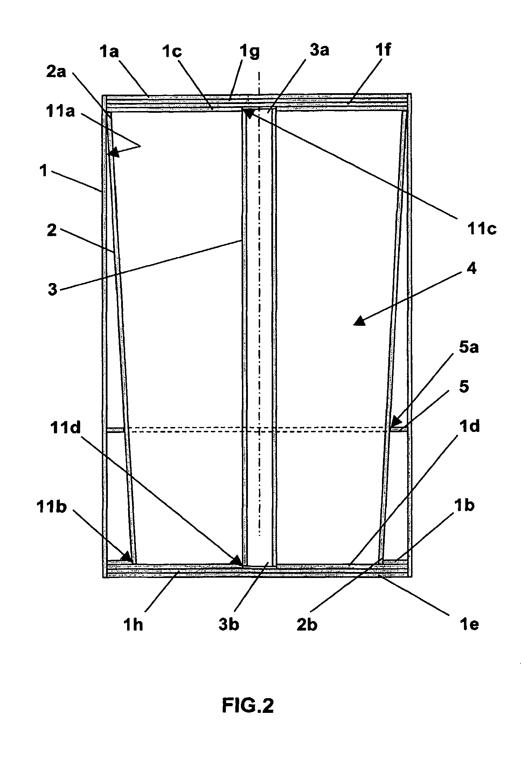

- la figure 2 représente, de manière détaillée et en coupe médiane longitudinale, la réalisation préférée de l'invention;

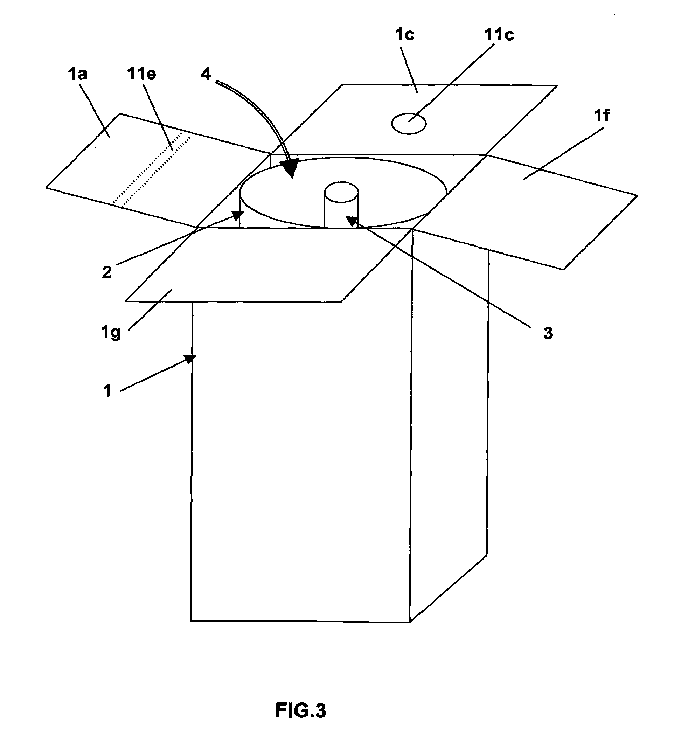

- la figure 3 représente, en perspective, la réalisation de la figure 2 avec la partie haute de la boîte ouverte.

### DESCRIPTION DETAILLEE DE L'INVENTION

L'emballage, représenté aux figures, est destiné à la préparation et au conditionnement d'une composition alimentaire du type « KEBAB » :
- fabriquée par l'assemblage de matières alimentaires crues, notamment du veau, de la dinde ou du poulet, découpées en morceaux de formes et de dimensions quelconques ;
- commercialisée dans ledit emballage ;
- destinée à être utilisée en restauration maintenue par la broche d'un grill vertical de cuisson.

Ledit emballage comporte essentiellement une boîte (1), un moule (2) contenu dans ladite boîte et un tube (3), centré dans ledit moule, destiné à être traversé par la broche du grill de cuisson et ledit moule contient la préparation alimentaire (4) qui est disposée autour dudit tube.

Le moule (2) est associé à des moyens (11a) et (11b) aptes à maintenir respectivement son ouverture haute (2a) et son ouverture basse (2b).

Le tube (3) est associé à des moyens (11c) et (11d) aptes à maintenir respectivement son extrémité haute (3a) et son extrémité basse (3b).

Le moule (2) est préférentiellement de forme tronconique.

Le tube (3) possède un profil intérieur, cylindrique, carré ou autre, apte à laisser passer la broche du grill de cuisson

La boîte (1) est préférentiellement de forme parallélépipédique à base carrée et comporte, au moins deux rabats (1a) et (1c) au niveau de son ouverture haute et au moins trois rabats (1b), (1d) et (1e) au niveau de son ouverture basse.

Le moyen apte à maintenir l'ouverture haute (2a) du moule (2) correspond à la paroi intérieure (11a) de la boîte (1) contre laquelle s'appuie l'extrémité haute dudit moule et le moyen apte à maintenir l'ouverture basse (2b) du moule (2) correspond à une ouverture circulaire (11b) pratiquée dans le rabat supérieur (1 b) de l'ouverture basse de ladite boîte et dans laquelle s'emboîte l'extrémité basse dudit moule.

Le moyen apte à maintenir l'extrémité haute (3a) du tube (3) correspond à une ouverture (11c) pratiquée dans le rabat inférieur (1c) de l'ouverture haute de ladite boîte et dans laquelle s'emboîte l'extrémité haute dudit tube et le moyen apte à maintenir l'extrémité basse (3b) du tube (3) correspond à une ouverture (11d) pratiquée dans le rabat intermédiaire (1d) de l'ouverture basse de ladite boîte et dans laquelle s'emboîte l'extrémité basse dudit tube.

La boîte (1) comporte préférentiellement quatre rabats (1a, 1c, 1f, 1g) au niveau de son ouverture haute et quatre rabats (1b, 1d, 1e, 1h) au niveau de son ouverture basse.

Le rabat supérieur (1a) de la boîte (1) peut comporter une bande à déchirer (11e).

La boîte (1) peut comporter au moins une cloison (5) pourvue d'une ouverture (5a) apte à laisser passer le corps du moule (2) afin de le maintenir également dans une position intermédiaire.

La boîte, le moule, le tube et la cloison de maintien intermédiaire sont préférentiellement réalisés en carton de qualité alimentaire.

Les rabats et la cloison intermédiaire ont préférentiellement des dimensions identiques aux dimensions de la section de la boîte.

La hauteur du moule est préférentiellement identique à la hauteur de la boîte.

La viande peut être préparée de la manière suivante : elle est d'abord méticuleusement nettoyée en ôtant les os et une certaine quantité de graisse visible, elle est ensuite coupée en tranches et/ou hachée mélangée à des additifs tels qu'épices, blancs d'oeuf, sel et autres, jusqu'à former une masse de viande consistante.

Ledit mélange est ensuite injecté dans le moule au moyen d'un tube de bourrage connu en soi.

Une fois le moule rempli, les rabats hauts de la boîte sont repliés et celle-ci est fermée par agrafage ou par collage (ruban adhésif ou autre).

Pour utiliser ladite préparation, il suffit d'ouvrir la boîte en ôtant la bande à déchirer, sortir le moule contenant la viande, glisser le tube sur la broche du grill puis ôter (par déchirement ou autre) ledit moule.

Bien entendu, l'invention n'est pas limitée aux modes de réalisation décrits et représentés pour lesquels on pourra prévoir d'autres variantes, en particulier dans :
- les formes et les dimensions des boîtes (parallélépipédiques ou autres) et des moules (tronconiques, cylindriques ou autres) ;
- la nature des matériaux constitutifs des boîtes, moules et tubes : carton, matières synthétiques ou autres ;
- le nombre de rabats de la boîte ;
- le type de composition alimentaire et la manière de la préparer ;
sans pour cela sortir du cadre de l'invention.

## Revendications

1. Emballage pour la préparation et le conditionnement d'une composition alimentaire du type « KEBAB » :
- fabriquée par l'assemblage de matières alimentaires crues, notamment du veau, de la dinde ou du poulet, découpées en morceaux de formes et de dimensions quelconques ;
- commercialisée dans ledit emballage;
- destinée à être utilisée en restauration maintenue par la broche d'un grill vertical de cuisson ;
ledit emballage comportant une boîte (1), un moule (2) contenu dans ladite boîte et un tube (3), centré dans ledit moule, destiné à être traversé par la broche du grill de cuisson et ledit moule contenant la préparation alimentaire (4) qui est disposée autour dudit tube.

2. Emballage, selon la revendication 1, **caractérisé en ce que** le moule (2) est associé à des moyens (11a) et (11b) aptes à maintenir respectivement son ouverture haute (2a) et son ouverture basse (2b).

3. Emballage, selon la revendication 1, **caractérisé en ce que** le tube (3) est associé à des moyens (11c) et (11d) aptes à maintenir respectivement son extrémité haute (3a) et son extrémité basse (3b).

4. Emballage, selon la revendication 2, **caractérisé en ce que** le moule (2) est de forme tronconique.

5. Emballage, selon la revendication 3, **caractérisé en ce que** le tube (3) possède un profil intérieur, cylindrique, carré ou autre, apte à laisser passer la broche du grill de cuisson.

6. Emballage, selon la revendication 1, **caractérisé en ce que** la boîte (1) est de forme parallélépipédique à base carrée et comporte, au moins deux rabats (1a) et (1c) au niveau de son ouverture haute et au moins trois rabats (1b), (1d) et (1e) au niveau de son ouverture basse.

7. Emballage, selon les revendications 2, 4 et 6, **caractérisé en ce que** le moyen apte à maintenir l'ouverture haute (2a) du moule (2) correspond à la paroi intérieure (11a) de la boîte (1) contre laquelle s'appuie l'extrémité haute dudit moule et le moyen apte à maintenir l'ouverture basse (2b) du moule (2) correspond à une ouverture circulaire (11 b) pratiquée dans le rabat supérieur (1b) de l'ouverture basse de ladite boîte et dans laquelle s'emboîte l'extrémité basse dudit moule.

8. Emballage, selon les revendications 3, 5 et 6, **caractérisé en ce que** le moyen apte à maintenir l'extrémité haute (3a) du tube (3) correspond à une ouverture (11c) pratiquée dans le rabat inférieur (1c) de l'ouverture haute de ladite boîte et dans laquelle s'emboîte l'extrémité haute dudit tube et le moyen apte à maintenir l'extrémité basse (3b) du tube (3) correspond à une ouverture (11d) pratiquée dans le rabat intermédiaire (1d) de l'ouverture basse de ladite boîte et dans laquelle s'emboîte l'extrémité basse dudit tube.

9. Emballage, selon la revendication 6, 7 ou 8, **caractérisé en ce que** la boîte (1) comporte quatre rabats (1a,1c,1f,1g) au niveau de son ouverture haute et quatre rabats (1b, 1d,1e,1h) au niveau de son ouverture basse.

10. Emballage, selon la revendications 7, **caractérisé en ce que** la boîte (1) comporte au moins une cloison (5) pourvue d'une ouverture (5a) apte à laisser passer le corps du moule (2) afin de le maintenir également dans une position intermédiaire.

## Claims

1. Package for the preparation and packaging of a food composition of the "KEBAB" type:
- manufactured by assembling raw food materials, in particular veal, turkey or chicken, cut into pieces of any shape or size;
- commercialised in said package;
- destined for use in the food service industry maintained by a spit of a vertical cooking rack;
said package including a box (1), a mould (2) contained within said box and a tube (3), centred within said mould, destined to be run through by the spit of the cooking rack and said mould containing the food preparation (4) which is positioned around said tube.

2. Packing, according to claim 1, **characterised in that** the mould (2) is associated to means (11a) and (11b) apt to maintain its upper opening (2a) and its lower opening (2b), respectively.

3. Packing, according to claim 1, **characterised in that** the tube (3) is associated to means (11c) and (11d) apt to maintain its upper end (3a) and its lower end (3b), respectively.

4. Packing, according to claim 2, **characterised in that** the mould (2) is of tapered shape.

5. Packing, according to claim 3, **characterised in that** the tube (3) has an interior profile, cylindrical or other, apt to allow the spit of the cooking rack to pass through.

6. Packing, according to claim 1, **characterised in that** the box (1) is of parallelepipedic shape with a square base and includes, at least two flaps (1a) and (1c) at the level of its upper opening and at least three flaps (1b), (1d) and (1e) at the level of its lower opening.

7. Packing, according to claims 2, 4 and 6, **characterised in that** the means apt to maintain the upper opening (2a) of the mould (2) correspond to the interior wall (11a) of the box (1) against which presses the upper end of said mould and the means to maintain the lower opening (2b) of the mould (2) correspond to a circular opening (11b) made in the upper flap (1b) of the lower opening of said box and which nests the lower end of said mould.

8. Packing, according to claims 3, 5 and 6, **characterised in that** the means apt to maintain the upper end (3a) of the tube (3) correspond to an opening (11c) made in the lower flap (1c) of the upper opening of said box and in which is nests the upper end of said tube and the means apt to maintain the lower end (3b) of the tube (3) correspond to an opening (11d) made in the intermediate flap (1d) of the lower opening of said box and in which nests the lower end of said tube.

9. Packing, according to claim 6, 7 or 8, **characterised in that** the box (1) includes four flaps (1a, 1c, 1f, 1g) at the level of its upper opening and four flaps (1b, 1d, 1e, 1h) at the level of its lower opening.

10. Packing, according to claim 7, **characterised in that** the box (1) contains at least one partition (5) provided with an opening (5a) apt to allow the body of the mould (2) to pass so as to maintain it also in an intermediate position.

## Patentansprüche

1. Verpackung zum Zubereiten und Abfüllen einer Nahrungsmittelzusammensetzung des Typs "KEBAB":
- hergestellt durch Zusammensetzen roher Nahrungsmittel, insbesondere von Kalb-, Puten- oder Hühnerfleisch, welches in Stücke mit unterschiedlichen Formen und Größen geschnitten wird;
- vertrieben in der besagten Verpackung;
- dazu bestimmt, in Gastronomiebetrieben, befestigt auf einem senkrechten Spieß, gegrillt zu werden;
wobei die besagte Verpackung eine Schachtel (1), eine in der besagten Schachtel enthaltene Form (2) und ein Rohr (3) umfasst, das sich in der besagten Form zentriert befindet und dazu bestimmt ist, von einem Grillspieß durchquert zu werden, und wobei die besagte Form die Nahrungsmittelzubereitung (4) enthält, welche um das besagte Rohr herum angeordnet ist.

2. Verpackung nach Anspruch 1, **dadurch gekennzeichnet, dass** die Form (2) mit Mitteln (11a) und (11b) verbunden ist, welche in der Lage sind, ihre jeweils obere Öffnung (2a) und untere Öffnung (2b) zu stützen.

3. Verpackung nach Anspruch 1, **dadurch gekennzeichnet, dass** das Rohr (3) mit Mitteln (11c) und (11d) verbunden ist, welche in der Lage sind, sein jeweils oberes Ende (3a) und unteres Ende (3b) zu stützen.

4. Verpackung nach Anspruch 2, **dadurch gekennzeichnet, dass** die Form (2) kegelstumpfartig ist.

5. Verpackung nach Anspruch 3, **dadurch gekennzeichnet, dass** das Rohr (3) ein zylindrisches, quadratisches oder sonstiges Innenprofil besitzt, welches in der Lage ist, den Grillspieß passieren zu lassen.

6. Verpackung nach Anspruch 1, **dadurch gekennzeichnet, dass** die Schachtel (1) quaderförmig mit quadratischer Grundfläche ist und zumindest zwei Laschen (1a) und (1c) im Bereich ihrer oberen Öffnung und zumindest drei Laschen (1b), (1d) und (1e) im Bereich ihrer unteren Öffnung umfasst.

7. Verpackung nach den Ansprüchen 2, 4 und 6, **dadurch gekennzeichnet, dass** das Mittel, welches in der Lage ist, die obere Öffnung (2a) der Form (2) zu stützen, der Innenwand (11a) der Schachtel (1) entspricht, gegen die das obere Ende der besagten Form drückt, und das Mittel, welches in der Lage ist, die untere Öffnung (2b) der Form (2) zu stützen, einer kreisförmigen Öffnung (11b) entspricht, die in der oberen Lasche (1b) der unteren Öffnung der besagten Schachtel ausgeführt ist und in welche das untere Ende der besagten Form eingefügt wird.

8. Verpackung nach den Ansprüchen 3, 5 und 6, **dadurch gekennzeichnet, dass** das Mittel, welches in der Lage ist, das obere Ende (3a) des Rohrs (3) zu stützen, einer Öffnung (11c) entspricht, die in der unteren Lasche (1c) der oberen Öffnung der besagten Schachtel ausgeführt ist und in welche das obere Ende des besagten Rohrs eingefügt wird, und das Mittel, welches in der Lage ist, das untere Ende (3b) des Rohrs (3) zu stützen, einer Öffnung (11d) entspricht, die in der mittleren Lasche (1d) der unteren Öffnung der besagten Schachtel ausgeführt ist und in welche das untere Ende des besagten Rohrs eingefügt wird.

9. Verpackung nach den Ansprüchen 6, 7 oder 8, **dadurch gekennzeichnet, dass** die Schachtel (1) vier Laschen (1a,1c,1f,1g) im Bereich ihrer oberen Öffnung und vier Laschen (1b, 1d,1e,1h) im Bereich ihrer unteren Öffnung umfasst.

10. Verpackung nach Anspruch 7, **dadurch gekennzeichnet, dass** die Schachtel (1) zumindest eine Zwischenwand (5) aufweist, welche mit einer Öffnung (5a) versehen ist, die in der Lage ist, den Körper der Form (2) passieren zu lassen, um diese in einer mittleren Position ebenfalls zu stützen.
